# EUROPEAN PATENT SPECIFICATION

(11) **EP 0 503 647 B1**
(45) Date of publication and mention of the grant of the patent: **04.11.1998**
(21) Application number: 92104319.6
(22) Date of filing: 12.03.1992
(51) Int. Cl.: C03B 33/07, C03B 33/10

(54) **Method for cutting a laminated glass sheet along predetermined lines**
Verfahren zum Schneiden von laminierter Glasscheibe nach vorgeschrieben Linien
Procédé pour couper une feuille de verre laminée selon des lignes prédeterminées

(30) Priority: 15.03.1991 IT TO910189
(43) Date of publication of application: 16.09.1992
(73) Proprietor: BOTTERO S.p.A., 12010 Cuneo (IT)
(72) Inventor: Aimar, Giacomo, I-12010 Cervasca (IT)
(74) Representative: Cerbaro, Elena

(56) References cited:
- DE-A- 3 230 554
- FR-A- 2 375 041
- US-A- 4 558 622

## Description

The present invention relates to a method for cutting a laminated glass sheet along predetermined lines.

US-A-4 558 622 discloses a method for cutting a glass sheet having two external glass sheets and an intermediate resilient plastic layer. The method comprises the following steps:
- making incisions in both glass sheets using a pair of opposite disc cutters traveling along a cutting line;
- placing a portion of the glass sheet disposed on one side of the cutting line on support members each of which is equipped with a rotatable spherical ball;
- exerting, by a fist elongated element disposed against the upper glass sheet along the relative incision, a predetermined action so as to cause the lower glass sheet to break off;
- exerting, by a second elongated element disposed against the lower glass sheet along the relative incision, a predetermined action so as to cause the upper glass sheet to break off;
- and cutting the intermediate layer moving away the two parts of the upper glass sheet and inserting a sharp edge of a cutting tool between the two parts of the upper glass sheet itself.

FR-A-2 375 041 discloses a machine for cutting laminated glass sheet having two external glass sheets and an intermediate resilient plastic layer. The machine comprises an inner support plate and an outer support plate on which a laminated glass sheet to be broken is disposed and is clamped by retaining means, and a pair of opposed cutters disposed between the support tables for making on each external glass sheet a relative incision. The outer support table is coupled to a fixed support frame to tilt with respect to the first support plate about an axis parallel to the incisions between two angular operative positions to break off both the external glass sheets, and to move with respect to the inner support plate itself perpendicularly to said axis to break the intermediate layers heated by heater means.

Also DE-A-32 30 554 discloses a machine for cutting laminated glass sheet having two external glass sheets and an intermediate resilient plastic layer. The machine comprises two substantially vertical support plates which support, in use, a laminated glass sheet and are hinged together to rotate relative to one another about a substantially vertical axis spaced apart from the laminated sheet glass so as to break off both external glass sheets after the external glass sheets themselves have been incised by a pair of faced cutters. The machine further comprises a nozzle for ejecting hot air to cut the intermediate layer when the laminated glass sheet is broken and the relative two portions are disposed inclined one respect to other.

Italian Patent IT-B-1 241 281, published on 29.12.1993 and thus not belonging to the state of the art within the meaning of Article 54 EPC, in the name of the same applicants and entitled: "METHOD AND APPARATUS FOR CUTTING A LAMINATED GLASS SHEET ALONG PREDETERMINED LINES" describes a method for cutting along predetermined lines a laminated glass sheet comprising two glass sheets and a film of plastics material interposed between the upper sheet and the lower sheet, which includes the following steps:
- disposing the laminated glass sheet on support means;
- making incisions in both glass sheets along a predetermined cutting line, the incisions being effected by the passage of respective disc cutters across the glass sheets at a first predetermined pressure, the cutters being moved simultaneously at both sides of the laminated glass sheet in a first direction along the cutting line;
- traversing a pressure roller across the upper glass sheet in the opposite direction from the previous movement and at a second predetermined pressure so as to cause the lower glass sheet to break off;
- raising a first portion of the laminated sheet on one side of the cutting line at an angle to a second portion of the sheet located on the opposite side of the cutting line so as to cause the upper glass sheet to break off; and
- localised heating of the intermediate synthetic plastics film and subsequent application of a force to the first portion of the laminated sheet transverse the cutting line on the side opposite the second portion of the laminated sheet so as to cut the intermediate synthetic plastics film.

This method is relatively simple and cheap to carry out: it is not, however, free from problems. In particular, during the step in which the upper glass sheet is broken off by the raising of a first portion of the laminated sheet at an angle on one side of the cutting line, the laminated glass sheet may slip slightly on the supporting table: hence, once the second glass sheet has been broken off and the portion of the laminated sheet which has previously been raised has been returned to a flat position parallel to the supporting table, the cutting line along which the incisions in the two glass sheets were made and along which it is still necessary to cut the intermediate synthetic plastics film, is out of alignment and, in practice, displaced towards the first portion of the laminated sheet relative to the heating resistor whose function is to melt and cut the plastics film. This may increase the time required to carry out the final cutting operation, may cause the cutting of the plastics film to be imprecise, possibly forming a ragged edge due to tearing because a high enough temperature is not reached along the cutting line and, in more serious cases, may even require the intervention of a workhand to reposition the sheet.

The object of the invention is to provide a method of the type described above which is the subject of the Applicant's said prior patent, but which is free from the disadvantage noted above and, in particular, enables even the plastics material between the two sheets of glass to be cut perfectly.

These objects are achieved by the invention which relates to a method for cutting a laminated glass sheet along predetermined lines, as defined in claim 1.

For a better understanding of the invention, a non-limiting description of one embodiment is now given with reference to the appended drawings, in which:
Figure 1 is a schematic elevational view in partial transverse section of cutting apparatus suitable for carrying out the method of the invention;
Figure 2 is a partial illustration of an enlarged detail of Figure 1, and;
Figures 3 to 7 illustrate the position of the apparatus of Figure 1 or of parts thereof during the main steps in carrying out the method of the invention.

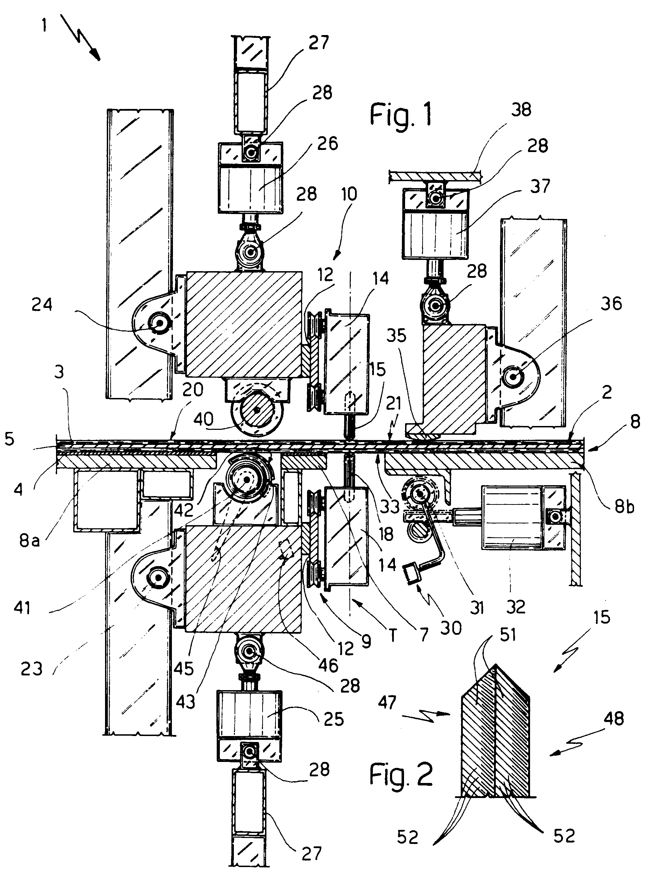

With reference to Figures 1 to 7, apparatus generally indicated 1 is shown for cutting a laminated sheet 2 along predetermined lines, the sheet comprising, for example, an upper glass sheet 3, a lower glass sheet 4 and an intermediate film 5 of synthetic plastics material, for example, polyvinyl butyrate, which is stuck between the glass sheets 3,4; the apparatus 1 includes coplanar support tables 7, 8 respectively disposed side by side and defining a support plane for the laminated sheet 2 to be cut, a lower cutting bridge 9 located beneath the support plane defined by the tables 7, 8 and supported in known manner, not illustrated for simplicity, so as to be movable parallel to this plane, and an upper cutting bridge 10 located above the support plane and also movable parallel thereto, again in known manner not illustrated for simplicity. Each bridge 9, 10 has a guide 12 extending transverse the sheet 2 along which a motor-driven carriage 14 of known type can run.

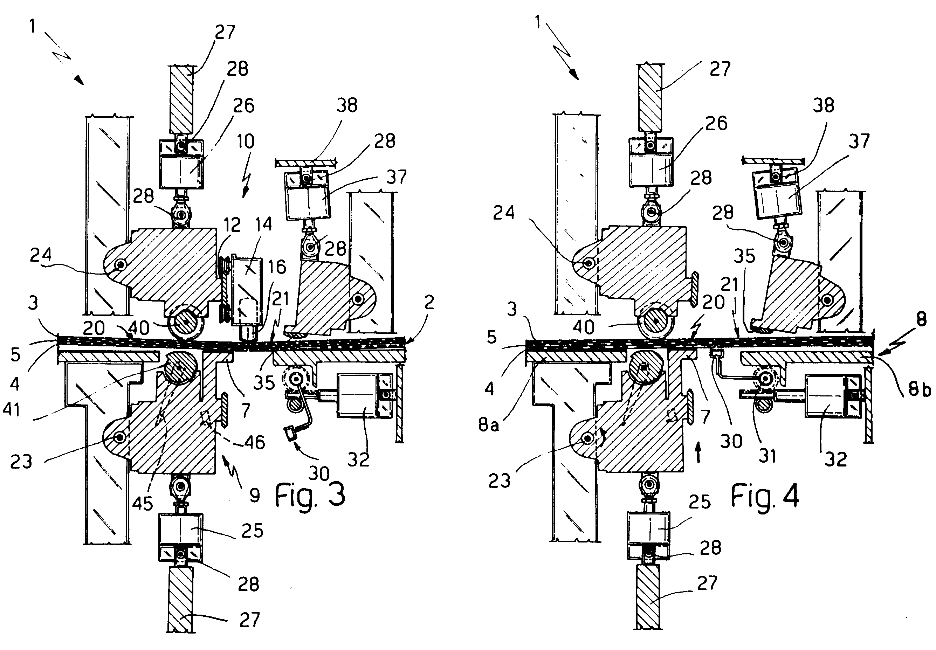

The carriage 14 of the upper bridge 10 has, in known manner, a disc cutter or cutting roller 15 which is rotatable about an axis substantially perpendicular to its guide 12 and parallel to the support plane defined by the tables 7, 8, as well as (Figure 3) a pressure roller 16, also known, which is rotatable about an axis parallel to that of the cutter 15, is arranged in tandem therewith, either behind or in front of it, and is operable in known manner, not illustrated for simplicity, separately from the disc cutter or roller 15; the carriage 14 of the lower bridge 9, on the other hand, is provided in known manner, solely with a cutting roller 18 constituted by a disc cutter similar to the cutter 15, located in correspondence therewith and rotatable about an axis parallel to that of the latter. The rollers 15, 16 and 18 are thus disposed on an imaginary cutting line for the sheet 2 the position of which is identified by an axis indicated T in Figure 1 which is substantially parallel to the guides 12, but is not necessarily a straight line, it being possible to predetermine the position and shape of this cutting line, along which, as will be seen, the sheet 2 will be cut into two portions 20, 21 on one side and the other of the line itself (in the particular case of Figure 1 to the left and to the right of the axis T) by means of the apparatus 1, in known manner, by suitable movements (possibly even simultaneous) of the carriages 14 along the guides 12 and of the bridges 9, 10 parallel to the plane defined by the tables 7, 8.

In accordance with the invention, the table 7 is disposed between two spaced-apart portions 8a and 8b of the table 8 and is fixed to the lower bridge 9; this latter and the upper bridge 10 are supported so that they can tilt relative to the supporting plane for the sheet 2 defined by the table 8 about respective axes parallel to the guides 12 and defined by respective hinges 23, 24, the bridges being articulated to respective linear actuators 25, 26 arranged to pivot them about their axes 23, 24; these actuators 25, 26 are, for example, connected to the bridges 9, 10 and to respective supporting frameworks 27 by pivotal connections 28.

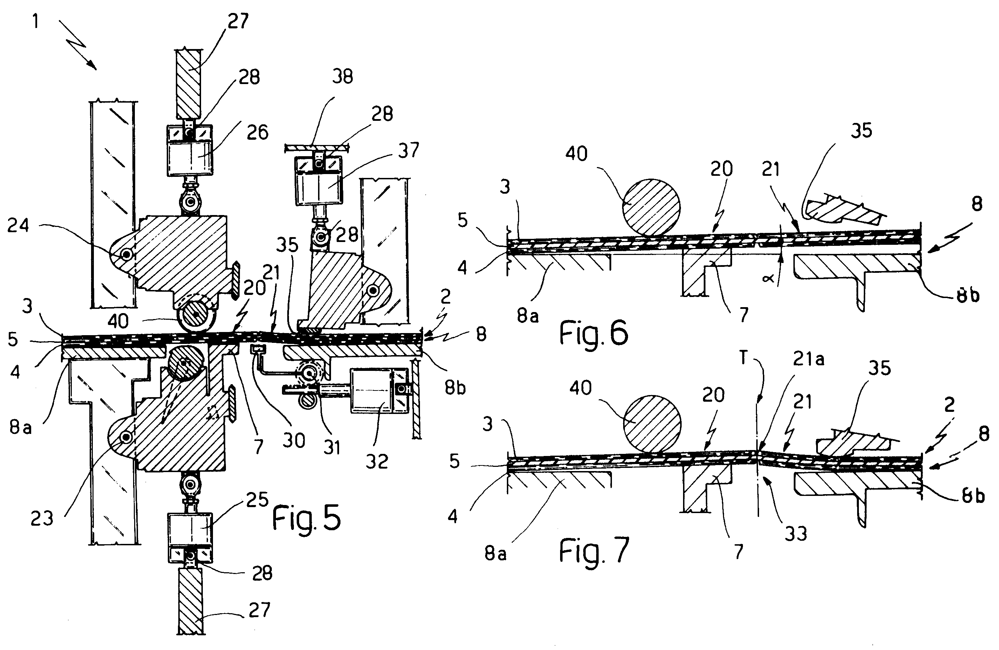

In accordance with the invention, the apparatus 1 further includes a heating resistance 30, of known type, for cutting the synthetic film 5 by heating it, the resistance being supported by the portion 8b, beneath the latter, so that it can tilt, being pivotable for example about an axis 31 by means of an actuator 32, in the particular case, of the rack-pinion type; the portion 8b faces the lower bridge 9 and the upper bridge 10 so that the resistance 30 may be moved by the actuator 32 from a rest position shown in Figure 1, in which it is beneath the table 8, to a working position illustrated in Figure 4, 5 in which the resistance 30 is inserted in an empty space 33 between the table portion 8b and the table 7. Above the portion 8b the apparatus 1 includes a clamp member 35 which tilts about an axis 36 defined by a suitable hinge which extends parallel to the support plane defined by the tables 7, 8, the rotation of the clamp member about the hinge 36 being driven by a known actuator 37, for example of the same type as 25 and 26 and like these connected to the member 35 controlled thereby and to a support 38 by an articulation hinge 28.

The upper bridge 10, as well as carrying the carriage 14 with the disc cutter 15 and the pressure roller 16, has an idle clamp roller 40 parallel to the guide 12 and rotatable about an axis parallel to the axes 23, 24, while the lower bridge 9 has a motor-driven roller 41 facing the roller 40 and in correspondence therewith but beneath the support plane defined by the table 7, 8 and also rotatable about an axis parallel to the axes 23, 24. This roller 41 is supported alongside the table 7 in an empty space between the latter and the portion 8a of the table 8 and has an eccentric circumferential cam profile 42 such that a portion 43 of the roller is arranged to be brought, by the rotation of the roller itself, above the support plane defined by the tables 7, 8 and into contact with the sheet 2. The motor-driven roller 41 is also provided with a radial arm 45 for operating a travel-limit switch 46 of known type.

With reference to Figure 2, a detail of the disc cutter 15 carried by the carriage 14 is illustrated on an enlarged scale. According to the preferred embodiment of the invention, the cutter 15 is in fact subdivided by a central through-plane perpendicular to the axis of rotation of the cutter 15 itself, into two symmetrical portions 47 and 48 each of which comprises a conic frustum and the two being arranged with their major faces adjacent each other.

Both portions 47 and 48 have respective lateral surfaces 51 formed with provided a plurality of equispaced, parallel, scored/milled grooves 52 inclined to the axis of rotation of the cutter 15; moreover, the grooves of one portion, for example the portion 48, of the cutter 15 are staggered by half their spacing relative to the grooves 52 of the portion 47.

Still with reference to Figures 1 to 7, the method of the invention, which can be carried out with the apparatus 1 described above includes the combination of several steps in sequence. More particularly, the first step is carried out in a similar manner to that described in the Applicant's Italian Patent IT-B-1 241 281 already mentioned above: after the bridges 9, 10 have been placed in suitable positions relative to the support plane defined by the table 8 on which the sheet 2 has been positioned, so as to bring the rollers 15, 16 and 18 into alignment with the predetermined cutting line, the carriages 14 are started and incisions are made in the glass sheets 3, 4 exactly along the cutting line; the incisions are made by pressing the rollers or cutters 15, 18 against the sheets 3, 4 simultaneously and with a predetermined pressure, the carriages 14 being moved along the guides 12 so as to move the rollers or cutters 15, 18 along the predetermined cutting line (Figure 1): during this step, the carriages 14 are moved simultaneously in a first predetermined direction perpendicular to the plane of Figure 1, the roller 16 being kept out of contact with the sheet 2, for example by being raised slightly relative to the cutter 15.

Immediately the carriages 14 have reached the end of their travel, a second traverse is then effected, in the opposite direction, this time with the roller 16 being pressed against the upper glass sheet 3 at a predetermined pressure; during this step, the cutters 15, 18 are displaced so as to take them out of contact with the sheet 2 while the roller 16 is instead lowered into contact with the upper sheet 3, after which the movement of the carriages 14 is reversed so that they follow the cutting line in the opposite direction from the previous one; by virtue of the pressure exerted by the roller 16, the lower glass sheet 4 is broken off in this step, in known manner.

One then proceeds to break off the upper glass sheet 3 which, in accordance with the invention, is achieved by raising the sheet 2 at an angle by acting on the portion 20 thereof which (Figures 1 and 3) is to the left-hand side of the cutting line and, hence, reacting on the portion 21 which is on the right-hand side of the cutting line; this operation is carried out by means of the combined and coordinated movement of the bridges 9, 10 and of the clamp member 35.

First of all, the lower bridge 9 is raised (Figure 4) by means of the actuator 25 in the direction of the arrow, the bridge rotating on the hinge 23 and causing the consequent rotation about the axis 23 of the table 7 on which rests that end of the sheet portion 20 adjacent the sheet portion 21 which is on the other side of the cutting line. At the same time as the bridge 9 is raised (Figure 4), a step is initiated in which the intermediate synthetic plastics sheet 5 is subjected to localised heating, along the cutting line which, as described, is in correspondence with the empty space 33 between the tables 7 and 8b; this localised heating step is effected by means of the electrical resistance 30 which, during the raising of the bridge 9, is brought into correspondence with the cutting line on that side of the laminated sheet 2 constituted by the lower glass sheet 4, in this particular case by rotation of the resistance 30 about the axis 31 by means of the actuator 32 so as to bring the resistance 30 itself into the empty space 33; the resistance 30 is then activated and starts to heat and melt away the sheet 5 along the cutting line

Now, as a result of the raising of the bridge 9, the portion 20 of the sheet 2 is brought into the inclined position illustrated in Figure 4, thus becoming partially detached from the table portion 8a and also drawing with it the portion 21 which is connected to the portion 20 by the film 5 and the sheet 3, thus partly raising the portion 21 from the respective table portion 8b; according to one of the principal characteristics of the invention, the angle to which the portion 20 is raised relative to the table 8a is less than, or at most equal to, the angle of friction between the portion 20 and the table 8a whereby, during this raising operation, the sheet 2 cannot slide to the left, so that no relative displacement between the cutting line and the resistance 30 occurs (Figure 6); immediately the portion 20 has been raised into its inclined position, this portion is clamped in the position of Figure 6 by the lowering of the bridge 10 to bring the clamp member 40 into cooperation with the upper sheet 3.

At this point, the rocker member 35 is lowered by the actuator 37 and is brought into contact with the sheet 3 so as to exert a predetermined pressure on the portion 21 of a magnitude such as to cause it to bend by elastic deformation (illustrated out of scale in Figure 7 purely by way of explanation) to a degree such as to bring the sheet part 4 of this portion 21 back to the table 8b and cause an edge 21a of this portion 21, adjacent the cutting line to rotate upwardly and to the right: this rotation induces a state of strain in the sheet 3 such as to cause the upper sheet 3 to break off completely along the incision made previously by the roller or cutter 15. This breaking off occurs more easily and is cleaner if the cutter 15 is formed as shown in Figure 2 with parallel grooves offset by half their spacing in the two halves of the cutter itself.

At this point, the portions 20, 21 are connected solely by the film 5 which is being melted along the cutting line, now defined by the opposite cut edges of the sheets 3, 4, the film being cut finally and clearly by the application to the portion 20 of the laminated sheet 2 of a force directed transverse the cutting line and on the opposite side from the portion 21 of the laminated sheet 2, in this particular case by means of the idle roller 40 which acts as a counter-member and cooperates with that part of the cut glass sheet 3 which forms part of the portion 20 of the laminated sheet 2, and by means of the motor-driven roller 41 which, once started, rotates so that, after a fraction of a rotation, its portion 43 comes to bear against the lower sheet 4 which forms part of the laminated sheet portion 20, applying the said transverse force to it by friction. The final separation of the portions 20, 21 is thus achieved with the consequent subdivision of the starting sheet 2 into two laminated sheets 20, 21 of desired dimensions, less than those of the sheet 2. Once the sheets 20 and 21 formed from the starting sheet 2 have been removed, the apparatus 1 is returned to the configuration of Figure 1 and is ready to cut a new sheet 2.

From what has been described, the advantages of the invention will be clear; the sheet 2 is cut quickly and precisely even in the step in which the plastics film interposed between the glass sheets is cut by virtue of the fact that the cutting of the upper glass sheet 3 is affected in such a manner as to avoid any movement of the sheet 2 and, hence, any disalignment of the cutting line and the resistance 30. Moreover, the method of cutting does not give rise to glass fragments and the cutting line obtained is clean and free from irregularities. Finally it should be noted that the simultaneous cutting of the upper glass sheet and heating of the synthetic film enables the operating cycle of the machine to be reduced to a minimum.

## Claims

1. A method for cutting a laminated glass sheet (2) along predetermined lines, the sheet (2) including an upper glass sheet (3), a lower glass sheet (4) and an intermediate film (5) of synthetic plastics material; the method including the following steps:
- arranging a laminated glass sheet (2) on a first (7) and a second support table (8), whereby the first support table (7) is positioned between two parts (8a,8b) of the second support table (8) and, together with one (8a) of these parts of the second support table (8) supports a first portion (20) of the laminated glass sheet (2), while a second portion (21) of this laminated glass sheet (2) is supported by the other part (8b) of the second support table (8), the first (20) and the second (21) portions of the laminated glass sheet (2) being disposed on the opposite sides of a predetermined cutting line;
- making incisions in both glass sheets (2,3) along the predetermined cutting line, the incisions being effected by the passage of respective disc cutters (15,18) across the glass sheets (2,3) at a first predetermined pressure, the disc cutters (15,18) being moved simultaneously at both sides of the laminated glass sheet (2) in a first direction along the cutting line;
- traversing a pressure roller (16) across the upper glass sheet (3) along the predetermined cutting line in a direction opposite to the previous movement and at a second predetermined pressure so as to cause the lower glass sheet (4) to break off;
- raising the first portion (20) of the laminated sheet (2) which is on one side of the cutting line to an angle (α) with the plane of the second support table (8) less than or equal to the angle of friction between the lower sheet (4) and the second support table (8), by means of a vertical displacement of the first support table (7);
- clamping the first portion (20) of the laminated glass sheet (2) against the first support table (7) by means of a first clamp member (40) brought into contact with the upper sheet (3);
- exerting a predetermined pressure against the second portion (21) of the laminated glass sheet (2) which is on the opposite side of the cutting line from the first portion (20) by means of a second clamp member (35) brought into contact with the upper sheet (3) so as to deform the second portion (21) of the laminated sheet (2) elastically and cause the upper sheet (3) to break off; and
- cutting the intermediate film (5) by localized heating (30) thereof along the cutting line.

2. A method according to Claim 1, characterized in that during the step of raising the first portion (20) of the laminated sheet (2) at an angle (α), the clamp members (40,35) are held at a predetermined distance above the supporting tables (7,8) for the said two portions (20,21) of the laminated sheet (2).

3. A method according to Claim 2, characterized in that the step of cutting the intermediate film (5) is carried out by means of an electrical resistance (30) which is brought into correspondence with the cutting line on that side of the laminated sheet (2) comprising the lower glass sheet (4); the localized heating step being started during the step in which the first portion (20) of the laminated sheet (2) is raised at an angle (α).

4. A method according to any one of Claims 2 or 3, characterized in that immediately after the upper glass sheet (3) has been broken off and during the step of localized heating of the intermediate plastics film (5), a step is included in which a force away from the cutting line is applied to the first portion (20) of the laminated sheet (2), this step being effected by means of an idle roller (40) which contacts the upper glass sheet (3) and which constitutes the first clamp member and by means of a motor-driven roller (41) which contacts the lower glass sheet (4) and is disposed parallel to the idle roller (40) and substantially parallel to the cutting line; the motor-driven roller (41) having a partly eccentric circumferential cam profile (42,43) and being disposed substantially facing the idle roller (40) adjacent the said first portion (20) of the laminated sheet (2).

5. A method according to any one of the preceding claims, characterized in that the step of forming an incision in at least the upper glass sheet (3) is carried out by means of a disc cutter (15) comprising two portions (47,48) which are symmetrical about a plane passing through the center thereof and perpendicular to the axis of rotation of the disc cutter (15), each portion (47,48) being shaped as a conic frustum and the portions (47,48) being located with their major bases adjacent each other; the portions (47,48) having respective lateral surfaces (51) with a plurality of equispaced parallel grooves (52) inclined to the axis of rotation of the cutter (15); the grooves (52) in one portion (47,48) being staggered by half their spacing with respect to the grooves (52) in the other portion (47,48).

## Patentansprüche

1. Verfahren zum Schneiden einer Verbundglastafel (2) entlang vorbestimmter Linien, wobei die Tafel (2) eine obere Glasschicht (3), eine untere Glasschicht (4) und eine Zwischenfolie (5) aus Kunststoffmaterial aufweist, mit den folgenden Verfahrensschritten:
- Anordnen einer Verbundglastafel (2) auf einem ersten (7) und einem zweiten Auflagetisch (8), wobei der erste Auflagetisch (7) zwischen zwei Teilen (8a, 8b) des zweiten Auflagetischs (8) angeordnet ist und zusammen mit einem Teil (8a) dieser beiden Teile des zweiten Auflagetischs (8) einen ersten Abschnitt (20) der Verbundglastafel (2) hält, während ein zweiter Abschnitt (21) der Verbundglastafel (2) von dem anderen Teil (8b) des zweiten Auflagetischs (8) gehalten wird, und wobei der erste Abschnitt (20) und der zweite Abschnitt (21) der Verbundglastafel (2) auf entgegengesetzten Seiten einer vorbestimmten Schnittlinie positioniert sind,
- Erzeugen von Einschnitten in den beiden Glasschichten (2, 3) entlang der vorbestimmten Schnittlinie, wobei das Einschneiden durch das Bewegen entsprechender Schneidscheiben (15, 18) auf den Glasschichten (2, 3) unter einem ersten vorbestimmten Druck erfolgt, und wobei die Schneidscheiben (15, 18) gleichzeitig auf beiden Seiten der Verbundglastafel (2) in einer ersten Richtung entlang der Schnittlinie bewegt werden,
- Verfahren einer Druckwalze (16) auf der oberen Glasschicht (3) entlang der vorbestimmten Schnittlinie in einer zur vorhergehenden Bewegung entgegengesetzten Richtung und unter einem zweiten vorbestimmten Druck, so daß die untere Glasschicht (4) durchbricht,
- Anheben des auf einer Seite der Schnittlinie liegenden ersten Abschnitts (20) der Verbundglastafel (2) um einen Winkel (α) zur Ebene des zweiten Auflagetischs (8), wobei der Winkel (α) kleiner als der oder gleich dem Reibungswinkel zwischen der unteren Schicht (4) und dem zweiten Auflagetisch (8) ist, durch ein vertikales Auslenken des ersten Auflagetischs (7),
- Spannen des ersten Abschnitts (20) der Verbundglastafel (2) gegen den ersten Auflagetisch (7) mit Hilfe eines ersten Klemmglieds (40), das in Kontakt mit der oberen Schicht (3) gebracht wurde,
- Ausüben eines vorbestimmten Drucks auf den zweiten Abschnitt (21) der Verbundglastafel (2), welcher sich vom ersten Abschnitt (20) aus gesehen auf der gegenüberliegenden Seite der Schnittlinie befindet, mit Hilfe eines in Kontakt mit der oberen Schicht (3) gebrachten zweiten Klemmglieds (35), so daß der zweite Abschnitt (21) der Verbundglastafel (2) elastisch verformt und die obere Schicht (3) durchgebrochen wird, und
- Durchtrennen der Zwischenfolie (5) durch deren örtliches Erwärmen (30) entlang der Schnittlinie.

2. Verfahren nach Anspruch 1, dadurch gekennzeichnet, daß während des Schritts, in dem der erste Abschnitt (20) der Verbundglastafel (2) um einen Winkel (α) angehoben wird, die Klemmglieder (40, 35) in einem vorbestimmten Abstand über den Auflagetischen (7, 8) für die beiden Abschnitte (20, 21) der Verbundglastafel (2) gehalten werden.

3. Verfahren nach Anspruch 2, dadurch gekennzeichnet, daß der Schritt des Schneidens der Zwischenfolie (5) mit einem elektrischen Widerstand (30) ausgeführt wird, der auf der Seite der unteren Glasschicht (4) der Verbundglastafel (2) in Kontakt mit der Schnittlinie gebracht wird, wobei der Schritt des örtlichen Erwärmens während des Schritts begonnen wird, in dem der erste Abschnitt (20) der Verbundglastafel (2) um einen Winkel (α) angehoben wird.

4. Verfahren nach Anspruch 2 oder 3, dadurch gekennzeichnet, daß unmittelbar nach dem Durchbrechen der oberen Glasschicht (3) und während des Schritts des örtlichen Erwärmens der Kunststoff-Zwischenfolie (5) ein Schritt erfolgt, in dem eine von der Schnittlinie weg gerichtete Kraft auf den ersten Abschnitt (20) der Verbundglastafel (2) aufgebracht wird, wobei dieser Schritt mittels einer freilaufenden Klemmwalze (40) ausgeführt wird, die an der oberen Glasschicht (3) anliegt und das erste Klemmglied bildet, sowie mittels einer motorgetriebenen Walze (41), die an der unteren Glasschicht (4) anliegt und parallel zu der Klemmwalze (40) sowie annähernd parallel zur Schnittlinie angeordnet ist, und wobei die motorgetriebene Walze (41) an ihrem Umfang ein zum Teil außermittiges Nockenprofil (42, 43) aufweist und in etwa gegenüber der Klemmwalze (40) angrenzend an den ersten Abschnitt (20) der Verbundglastafel (2) angeordnet ist.

5. Verfahren nach irgendeinem der vorgenannten Ansprüche, dadurch gekennzeichnet, daß der Schritt, in dem mindestens in der oberen Glasschicht (3) ein Einschnitt erzeugt wird, mit einer Schneidscheibe (15) ausgeführt wird, die zwei Abschnitte (47, 48) aufweist, die symmetrisch zu einer Ebene sind, die durch den Mittelpunkt der Schneidscheibe (15) verläuft rechtwinklig zu ihrer Drehachse liegt, wobei jeder der beiden Abschnitte (47, 48) die Form eines Kegelstumpfs aufweist und wobei die Abschnitte (47, 48) jeweils Seitenflächen (51) mit einer Mehrzahl parallel und in gleichen Abständen zueinander angeordneter sowie in Bezug auf die Drehachse der Schneidscheibe (15) geneigter Nuten (52) aufweisen, und wobei die Nuten (52) in einem Abschnitt (47, 48) in Bezug auf die Nuten (52) in dem anderen Abschnitt (47, 48) um die Hälfte ihres Abstands versetzt sind.

## Revendications

1. Procédé de découpage d'une feuille de verre laminée (2) selon des lignes prédéterminées, la feuille (2) comprenant une feuille de verre supérieure (3), une feuille de verre inférieure (4) et un film intermédiaire (5) en matière plastique synthétique, le procédé comprenant les étapes ci-après:
- on dispose une feuille de verre laminée (2) sur une première (7) et une seconde (8) table support, de manière que la première table support (7) soit positionnée entre deux parties (8a, 8b)) de la seconde table support (8) et, conjointement avec l'une (8a) de ces parties de la seconde table support (8), supporte une première partie (20) de la feuille de verre laminée (2) tandis qu'une deuxième partie (21) de cette feuille de verre laminée (2) est supportée par l'autre partie (8b) de la seconde table support (8), les premières (20) et secondes (21) parties de la feuille de verre laminée (2) étant disposées sur des côtés opposés d'une ligne de coupe prédéterminée;
- on pratique des incisions sur les deux feuilles de verre (3, 4) suivant la ligne de coupe prédéterminée, les incisions étant effectuées par le passage d'organes de coupe discoïdes (15, 18) respectifs sur les feuilles de verre (3, 4) à une première pression prédéterminée, les organes de coupe discoïdes (15,18) étant déplacés simultanément sur les deux côtés de la feuille de verre laminée (2), dans une première direction suivant la ligne de coupe;
- on fait traverser un galet de pressage (16) sur la feuille de verre supérieure (3) dans la ligne de coupe prédéterminée, dans une direction opposée à celle du mouvement antérieur et sous une deuxième pression déterminée, de manière à provoquer la rupture de la feuille de verre inférieure (4);
- on lève la première partie (20) de la feuille laminée (2) qui se trouve d'un côté de la ligne de coupe sous un certain angle (α), par rapport au plan de la seconde table support (8), inférieur ou égal à l'angle de frottement entre la feuille inférieure (4) et la seconde table support (8), au moyen d'un déplacement vertical de la première table support (7);
- on serre la première partie (20) de la feuille de verre laminée (2) contre la première table support (7), au moyen d'un premier organe de serrage (40) mis en contact avec la feuille supérieure (3);
- on exerce une pression prédéterminée contre la seconde partie (21) de la feuille de verre laminée (2) qui se trouve du côté opposé de la ligne de coupe par rapport à la première partie (20), au moyen d'un deuxième organe de serrage (35) mis en contact avec la feuille supérieure (3), de manière à déformer élastiquement la seconde partie (21) de la feuille de verre laminée (2) et provoquer la rupture de la feuille supérieure (3); et
- on découpe le film intermédiaire (5) en pratiquant un chauffage localisé (30) de celui-ci sur la ligne de découpage.

2. Procédé selon la revendication 1, caractérisé par le fait que, durant l'étape de levée de la première partie (20) de la feuille laminée (2) sous un certain angle (α), les organes de serrage (40, 35) sont maintenus à une distance prédéterminée au-dessus des tables support (7, 8) desdites deux parties (20, 21) de la feuille laminée (2).

3. Procédé selon la revendication 2, caractérisé par le fait que l'étape de découpage du film intermédiaire (5) est exécutée au moyen d'une résistance électrique (30) mise en correspondance avec la ligne de découpage sur le côté de la feuille laminée (2) qui comprend la feuille de verre inférieure (4); l'étape de chauffage localisé étant lancée durant l'étape dans laquelle la première partie (20) de la feuille laminée (2) est levée sous un certain angle (a).

4. Procédé selon l'une quelconque des revendications 2 ou 3, caractérisé par le fait que, immédiatement après que la feuille de verre supérieure (3) a été rompue, et pendant l'étape de chauffage localisé du film plastique intermédiaire (5), une étape est incluse dans laquelle une force d'écartement de la ligne de coupe est appliquée à la première partie (20) de la feuille laminée (2), cette étape étant exécutée au moyen d'un rouleau fou (40), qui entre en contact avec la feuille de verre supérieure (3) et qui constitue le premier organe de serrage, et au moyen d'un rouleau entraîné par un moteur (41) qui entre en contact avec la feuille de verre inférieure (4) et est disposé parallèlement au rouleau fou (40) et sensiblement parallèlement à la ligne de coupe, le rouleau entraîné par moteur (41) ayant un profil de came circonférentiel (42, 43) partiellement excentrique et étant disposé sensiblement en face du rouleau fou (40) adjacent à la première partie (20) de la feuille laminée (2).

5. Procédé selon l'une quelconque des revendications précédentes, caractérisé par le fait que l'étape de formage d'une incision, dans au moins la feuille de verre supérieure (3), est exécutée au moyen d'un organe de découpe à disque (15) comprenant deux parties (47, 48) symétriques de part et d'autre d'un plan passant par son centre et perpendiculaire à l'axe de rotation de l'organe de découpe à disque (15), chaque partie (47, 48) étant configurée en tronc de cône et les parties (47, 48) étant placées avec leurs grandes bases adjacentes l'une à l'autre, les parties (47, 48) ayant des surfaces latérales (51) respectives comportant une pluralité de rainures (52) parallèles espacées de façon égale, inclinées par rapport à l'axe de rotation de l'organe de découpe (15), les gorges (52) ménagées (52) dans une partie (47, 48) étant en quinconce, de la valeur de la moitié de leur espacement, par rapport aux gorges (52) ménagées dans l'autre partie (47, 48).
